# EUROPÄISCHE PATENTSCHRIFT

(11) **EP 0 729 705 B1**
(45) Veröffentlichungstag und Bekanntmachung des Hinweises auf die Patenterteilung: **28.03.2001**
(21) Anmeldenummer: 95119058.6
(22) Anmeldetag: 04.12.1995
(51) Int. Cl.: A23F 5/04, A23G 1/02, A23L 1/36, A23N 12/10

(54) **Verfahren zum Rösten und Vorrichtung zum Durchführen dieses Verfahrens**
Process for roasting oilseeds and apparatus for carrying out this process
Procédé de grillage de graines oléagineuses et appareil pour la mise en oeuvre du procédé

(30) Priorität: 24.12.1994 DE 4446788
(43) Veröffentlichungstag der Anmeldung: 04.09.1996
(73) Patentinhaber: MASCHINENFABRIK G.W. BARTH LUDWIGSBURG GMBH & CO., D-71691 Freiberg (DE)
(72) Erfinder: Escher-Studer, Felix, Prof., CH-8607 Seegräben ZH (CH); Perren-Egli, Rainer, CH-6022 Grosswangen LU (CH); Keme, Tomas, CH-5001 Aurau (CH); Sandmeier, Dieter, Dr., D-91080 Uttenreuth/Weiher (DE); Mayer-Potschak, Karl, D-71638 Ludwigsburg (DE)
(74) Vertreter: Jeck, Anton, Dipl.-Ing.

(56) Entgegenhaltungen:
- DE-A- 1 692 234
- US-A- 4 161 549
- ZUCKER- UND SUESSWARENWIRTSCHAFT, 1996, 49_(3) 135-138, XP000573572 PERREN, R. ET AL: "Roasting of hazelnuts. III. Optimization of the roasting process."
- DATABASE CAB CAB INTERNATIONAL, WALLINGFORD, OXON, GB PERREN R: "Optimisation of hot-air roasting of hazelnuts to improve oxidative stability." XP002007330 & LEBENSM.- TECHNOL., 1996, Bd. 29, Nr. 1/2, Seiten 2-8,
- DATABASE WPI Section Ch, Week 7723 Derwent Publications Ltd., London, GB; Class D11, AN 77-41022Y XP002007331 & JP 52 017 107 B (MORINAGA CONFECTION KK) , 13.Mai 1977
- DATABASE WPI Section Ch, Week 8948 Derwent Publications Ltd., London, GB; Class D14, AN 89-350299 XP002025900 & ES 2 008 445 A (PONS ESPONA C) , 16.Juli 1989

## Beschreibung

Die Erfindung betrifft ein Verfahren zum Rösten von Ölsamen sowie eine Vorrichtung zum Durchführen dieses Verfahrens.

Geröstete Ölsamen, z.B. Haselnüsse, unterliegen bekannterweise in Abhängigkeit vom angewendeten Röstverfahren und von der Rösttemperatur einem beschleunigten oxidativen Verderb. Üblicherweise werden diese Ölsamen in unterschiedlichen Röstverfahren, jedoch prinzipiell in einer trockenen Atmosphäre geröstet, was den obigen Verderb beschleunigt.

Die Behandlung von Ölsamen mit Sattdampf zur Reduktion des Enzymgehaltes ist bekannt und z.B. in J.H. Mitchell, R.K. Malphrus, 1977, Lipid oxidation in spanish peanuts: The effect of moist heat treatment, J. Food Sci., 42 (6), 1457 - 1461; W.R. Forbus, S.D. Senter, 1976, Conditioning pecans with steam to improve shelling efficiency and storage stability, J. Food Sci. 41, 794 - 798. Die Behandlung von Kakaobohnen mit Wasserdampf oder Heißwasser zur Verbesserung der Schälbarkeit und zur Keimreduktion ist ebenfalls bekannt. Weiter ist es üblich, daß bei der Kakaoröstung Wasser zur Sterilisation am Ende der Röstung eingespritzt wird. Ferner ist auch die Verwendung von Dampf bei der Röstung von Kaffee zur Erhöhung der Aromaausbeute bekannt. Dies geschieht entweder während der gesamten Röstdauer oder in einer ersten Stufe unter Druck. Ziel der Anwendung von Dampf beziehungsweise einer feuchten Atmosphäre ist unter anderem eine verstärkte Expansion der Bohnen.

Ausgehend von dem obigen Stand der Technik liegt der Erfindung die Aufgabe zugrunde, die strukturelle Veränderung der Ölsamen durch die Anwendung von feuchter Luft in einer ersten Röststufe zu verhindern.

Die gestellte Aufgabe wird erfindungsgemäß durch die Merkmale des Anspruches 1 gelöst.

Der tragende Gedanke der Erfindung bezieht sich auf die Anwendung einer feuchten Röststufe und bezweckt dabei die Erhaltung der zellulären Struktur und damit die Verbesserung der Oxidationsstabilität der Produkte. Dies wird erreicht, indem die Nüsse z.B. auf 130° C erhitzt werden, ohne daß der Wassergehalt stark abnimmt. Bei 130° C ändert sich der physikalische Zustand der Zellwandpolymere, wodurch Wasserdampf die Zellen verlassen kann, ohne die Mikrostruktur anzugreifen. Dadurch bleibt eine Zellstruktur erhalten, die für atmosphärischen Sauerstoff eine optimale Diffusionsbarriere darstellt.

Findet eine Trocknung statt, bevor die Nüsse 130° C erreicht haben, oder werden die Nüsse schnell auf Temperaturen über 150° C erhitzt, werden die Zellorgane beschädigt, beziehungsweise führt das forcierte Austreten von Wasserdampf zu einer starken Expansion der Produkte und damit zu einem Abbau von Diffusionswiderständen.

Das Verfahren kann vorzugsweise mittels einer Röstmaschine durchgeführt werden, wie sie im Anspruch 5 definiert ist.

Durch die Anwendung eines Zwei-Stufen-Röstverfahrens kann die oxidative Stabilität von gerösteten Haselnüssen erhöht werden. In der ersten Röststufe werden bei einer Temperatur zwischen 90 und 150° C und bei einem partiellen Wasserdampfdruck der Luft von 0,1 bar (entspricht 100 % relativer Luftfeuchtigkeit bei 50° C) bis 1,01 bar (entspricht 100 % relativer Luftfeuchtigkeit bei 100° C) die Haselnüsse während 4 bis 20 Minuten vorbehandelt, um in einer zweiten Stufe in trockener Atmosphäre bei einer höheren Temperatur konfektioniert zu werden (Aroma- und Farbbildung, Wassergehaltsreduktion). Die Oxidationsstabilität des Endproduktes kann zusätzlich verbessert werden, wenn die Nüsse vor der Röstung auf einen Wassergehalt von 3 bis 10, vorzugsweise 5,5 bis 7 %, angefeuchtet werden (auch hinsichtlich eines Ausgleichs der Wasserverteilung in einem längere Zeit gelagerten Lot). Dies geschieht vorzugsweise durch das Aufsprühen von Wasser auf die rohen Haselnüsse oder Bedampfung derselben vor der Röstung. Beide Verfahrensschritte können gleichzeitig durchgeführt werden. Gemeinsam ist diesen Verfahrensschritten:
Anfeuchtung der Nüsse, eine Feuchtröst-Stufe und eine Konfektionierungsstufe. Hierdurch werden die Oxidationsstabilität sowie das Röstaroma (im Vergleich zu einer konventionellen Röstung bei Anwendung desselben Temperaturverlaufs) deutlich verbessert.

Die in der Folge beschriebene Röstmaschine ist nicht Teil der vorliegenden Erfindung.

Das vorgeschlagene Verfahren Kann vorzugsweise mittels einer Röstmaschine für Ölsamen durchgeführt werden, die einen Behälter sowie mindestens ein Rührwerkzeug mit Heißgas abgebenden Düsen aufweist. Die Düsenauslässe sind im Röstgut angeordnet, wobei der Abstand der Düsen voneinander in tangentialer Ansicht des Rührwerkzeuges von der Mitte des Behälters zur Behälterwand hin abnimmt. Durch diese Maßnahmen wird insbesondere der Vorteil erreicht, daß die Ölsamen zum größten Teil gleichmäßig vermischt und somit geröstet werden, und zwar unabhänig davon, ob sie sich näher zur oder weiter weg von der Mitte bzw. Außenwand des Behälters befinden.

Handelt es sich um eine Röstmaschine mit einem im Querschnitt kreisrunden Behälter, dann ist es zweckmäßig, wenn die Drehachse des Rührwerkzeuges in der Mitte des Behälters angeordnet ist und wenn das Rührwerkzeug mindestens zwei von der Achse abgehende Arme aufweist. Im Rahmen dieses Erfindungsgedankens ist es besonders zweckmäßig, wenn die Rührarme in etwa gleichmäßig um die Drehachse des Rührwerkzeuges verteilt sind und wenn diese als Rohrstücke ausgebildet sind, die sich zu ihren Enden hin verjüngen. Durch die Gasbeaufschlagung der Ölsamen sowie Vermischung derselben mittels des Rührwerkzeuges ist sichergestellt, daß die Ölsamen im Behälter optimal geröstet werden, und zwar unabhängig davon, wo sie sich im Behälter befinden.

Ferner sieht eine besonders zweckmäßige Ausgestaltung der Erfindung vor, daß die Arme in ihrer vertikalen Draufsicht bogenförmig ausgebildet sind und in derselben Ebene oder in bezug auf den Röstgut-Spiegel höhenversetzt angeordnet sind. Durch diese Maßnahmen wird der vorgeschlagene und gewünschte Abstand zwischen den Düsen in besonders einfacher Weise erreicht.

Eine weitere zweckmäßige Ausgestaltung der Röstmaschine sieht vor, daß die Düsen als Rohrstücke ausgebildet sind, die etwa parallel zur Drehachse des Rührwerkzeuges verlaufen.

Die beschriebene Röstmaschine ist besonders gut dazu geeignet, die Ölsamen in zwei Stufen zu Rösten, wobei in der ersten Röststufe die Ölsamen zwischen 3 und 20 Minuten bei einer Temperatur von 70 bis 150° C und einer relativen Feuchtigkeit von 3 bis 30% vorbehandelt werden, während sie in der zweiten Stufe in einer trockenen Atmosphäre und bei einer höheren Temperatur konfektioniert werden (Aromabildung und Wassergehaltsreduktion).

Ein Ausführungsbeispiel ist in der Zeichnung schematisch dargestellt und wird im folgenden näher erläutert. Es zeigen
- Fig. 1: eine Anlage zum Rösten von Ölsamen,
- Fig. 2: den in Fig. 1 dargestellten Behälter in vertikaler Draufsicht und
- Fig. 3: einen Schnitt entlang der Linie A-A nach Fig. 2.

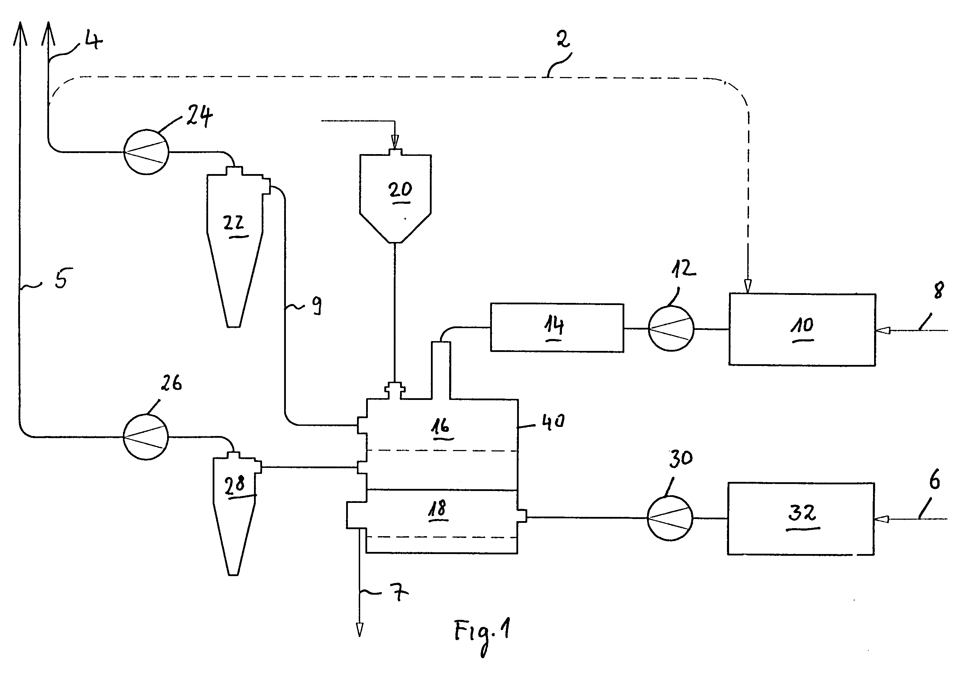

Die in Fig. 1 dargestellte Anlage zum Rösten besteht aus einer Frischluftzufuhr 8, mit der ein Heißlufterzeuger versorgt wird, von wo aus diese Luft über einen Heißluftventilator 12 und eine Heißluftkonditionierung 14 in den Behälter 40 der Röstmaschine 16 gelangt. An den Behälter 40 sind die Belüftung 20 sowie ein Abluftrohr 9 der Abscheider-Röstsektion 22 mit einem Absaugventilator 24 und einer Fortluftleitung 4 der Röstsektion angeschlossen. Ferner ist an dem Behälter 40 eine Abscheider-Kühlsektion 28 mit einem Absaugventilator 26 und einer Fortluftleitung 5 angeschlossen. Unterhalb des Röstraumes 16 ist ein Kühlraum 18 angeordnet, der zum einen an eine Frischluftleitung 6 mit einem Kühllufterzeuger 32 und einen Kühlventilator 30 angeschlossen ist, zum anderen erfolgt der Abtransport des Röstgutes über eine Rohrleitung 7. Ferner ist zu erkennen, daß die Fortluftleitung 4 mit dem Heißlufterzeuger 10 über eine Rezirkulationsleitung 2 verbunden ist.

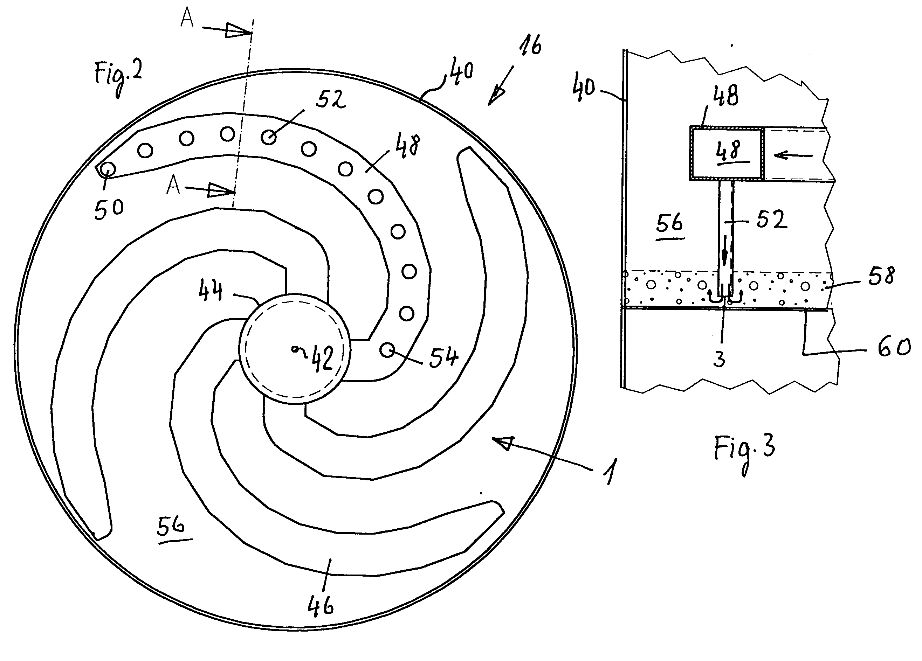

Die in Fig. 1 dargestellte Röstmaschine 16 für Ölsamen, vorzugsweise Haselnüsse und andere Nußsorten, und für Kaffee- oder Kakaobohnen, weist den Behälter 40 sowie ein Rührwerkzeug 1 mit Heißgas abgebenden Düsen 50, 52, 54 auf (vgl. Fig. 2). Die Düsenauslässe 3 (Fig. 3) sind im Röstgut 58 angeordnet, wobei der Abstand der Düsen 50, 52, 54 voneinander in tangentialer Ansicht des Rührwerkzeuges 1 von der Mitte 42 des Behälters 16 zur Behälterwand 40 hin abnimmt.

Man erkennt, daß der Behälter im Querschnitt kreisrund ist und daß die Drehachse des Rührwerkzeuges 1 in der Mitte 42 des Behälters angeordnet ist, wobei das Rührwerkzeug 1 vier von der Achse 42 abgehende Arme 46, 48 aufweist. Diese Rührarme sind gleichmäßig um die Drehachse 42 des Rührwerkzeuges 1 verteilt und als Rohrstücke ausgebildet, die sich zu ihren Enden hin verjüngen.

Ferner ist zu erkennen, daß die Arme 46, 48 in ihrer vertikalen Draufsicht bogenförmig ausgebildet und in derselben Ebene angeordnet ist. Die Düsen 50, 52, 54 (vgl. Fig. 2 und 3) sind vertikal nach unten zu ausgerichtet und als Rohrstücke ausgebildet, die etwa parallel zur Drehachse 42 des Rührwerkzeuges 1 verlaufen. Die Düsenauslässe 3 sind in den freien Enden der Düsen ausgebildet. Der Röstraum 56 ist vom Kühlraum 8 durch eine ebene Bodenplatte 16 getrennt. Wird nun das Rührwerkzeug 1 verdreht und werden die Düsen 50, 52, 54 mit Druckgas beaufschlagt, dann wird das Röstgut 58 im Röstraum 56 verwirbelt und zum größten Teil gleichmäßig mit Druckgas beaufschlagt. Die Ausbildung des Rührwerkzeuges gewährleistet, daß die "Dichte" des Röstgutes 58 innerhalb des Röstraumes 56 in etwa konstant ist.

## Patentansprüche

1. Verfahren zum Rösten von Ölsamen, z.B. Haselnüsse, und von Kaffee- oder Kakaobohnen,
gekennzeichnet durch
zwei Röststufen, wobei in der ersten Röststufe die Ölsamen zwischen 3 und 20 Minuten bei einer Temperatur von 70 bis 150° C und einer relativen Feuchtigkeit von 3 bis 30 % vorbehandelt werden, während sie in der zweiten Stufe in einer trockenen Atmosphäre und bei einer höheren Temperatur, z.B. 190° C konfektioniert werden (Aromabildung und Wassergehaltsreduktion).

2. Verfahren nach Anspruch 1,
dadurch gekennzeichnet,
daß die Ölsamen 4 bis 20 Minuten, vorzugsweise 6 bis 8 Minuten, vorbehandelt werden und daß die Vorröststufe in feuchter Atmosphäre nahe dem atmosphärischen Druck durchgeführt wird.

3. Verfahren nach Anspruch 1 oder 2,
dadurch gekennzeichnet,
daß die Temperatur während der Vorbehandlung 95 bis 130° C, vorzugsweise 100 bis 110° C, beträgt.

4. Verfahren nach einem der Ansprüche 1 bis 3,
dadurch gekennzeichnet,
daß die Luftfeuchtigkeit 6 bis 10 %, vorzugsweise 8 bis 9 %, beträgt.

## Claims

1. Method of roasting oil seeds, e.g. hazelnuts, and coffee or cocoa beans, characterised by two roasting stages, the oil seeds being pretreated in the first roasting stage for between 3 and 20 minutes at a temperature from 70 to 150° C and at a relative humidity of 3 to 30 %, while they are finished in the second stage in a dry atmosphere and at a higher temperature, e.g. 190° C (to establish the flavour and to reduce the water content).

2. Method according to claim 1, characterised in that the oil seeds are pretreated for 4 to 20 minutes, preferably for 6 to 8 minutes, and in that the preroasting stage is accomplished in a moist atmosphere close to the atmospheric pressure.

3. Method according to claim 1 or 2, characterised in that the temperature during the pretreatment is 95 to 130° C, preferably 100 to 110° C.

4. Method according to one of claims 1 to 3, characterised in that the air humidity is 6 to 10 %, preferably 8 to 9 %.

## Revendications

1. Procédé de torréfaction de graines oléagineuses, telles les noisettes, et de grains de café ou de cacao, caractérisé par deux étapes de torréfaction, les graines oléagineuses étant prétraitées au cours de la première étape de torréfaction pendant 3 à 20 minutes à une température de 70 à 150°C et sous une humidité relative de 3 à 30 %, alors qu'au cours de la deuxième étape, elles sont traitées sous atmosphère sèche et à une température plus élevée, 190°C par exemple (développement de l'arôme et réduction de la teneur en eau).

2. Procédé selon la revendication 1, caractérisé en ce que les graines oléagineuses sont prétraitées pendant 4 à 20 minutes, de préférence 6 à 8 minutes, et en ce que l'étape de torréfaction préalable est effectuée sous atmosphère humide proche de la pression atmosphérique.

3. Procédé selon la revendication 1 ou 2, caractérisé en ce que la température pendant le traitement préalable est de 95 à 130°C, de préférence 100 à 110°C.

4. Procédé selon l'une quelconque des revendications 1 à 3, caractérisé en ce que l'humidité de l'air est de 6 à 10 %, de préférence 8 à 9 %.
